# EUROPÄISCHE PATENTSCHRIFT

(11) **EP 2 875 933 B1**
(45) Veröffentlichungstag und Bekanntmachung des Hinweises auf die Patenterteilung: **03.04.2019**
(21) Anmeldenummer: 13194325.0
(22) Anmeldetag: 25.11.2013
(51) Int. Cl.: B22F 3/105, B33Y 10/00, B33Y 40/00, B29C 64/153

(54) **Dokumentation generativer Herstellungsverfahren**
Documentation of generative production methods
Documentation de procédé de fabrication génératif

(43) Veröffentlichungstag der Anmeldung: 27.05.2015
(73) Patentinhaber: MTU Aero Engines AG, 80995 München (DE)
(72) Erfinder: Liebl, Christian, 85461 Bockhorn (DE); Jakimov, Andreas, 81245 München (DE); Hertter, Manuel, 81247 München (DE); Schneiderbanger, Stefan, 85221 Dachau (DE)

(56) Entgegenhaltungen:
- EP-A1- 2 327 535
- US-A1- 2010 174 392
- US-A1- 2012 177 696
- US-A1- 2012 183 701

## Beschreibung

### HINTERGRUND DER ERFINDUNG

### GEBIET DER ERFINDUNG

Die vorliegende Erfindung betrifft ein Verfahren zur generativen Herstellung von Bauteilen durch schichtweises Aufbringen von Pulvermaterial auf einem Substrat oder einem zuvor hergestellten Teil eines Bauteils und die Dokumentation der Herstellung sowie einen entsprechend hergestellten Dokumentationskörper.

### STAND DER TECHNIK

Generative Herstellungsverfahren zur Herstellung eines Bauteils werden in der Industrie für das sogenannte Rapid - Tooling, Rapid - Prototyping oder bei der Herstellung von Serienprodukten im Rahmen des Rapid - Manufacturing eingesetzt. Beispiele für generative Herstellungsverfahren sind das selektive Laserschmelzen, das selektive Lasersintern, das Elektronen-strahlschmelzen, das Elektronenstrahlsintern und vergleichbare Verfahren.

Bei diesen Verfahren wird das zu erzeugende Bauteil schichtweise aus Pulvermaterial aufgebaut, wobei das Pulvermaterial entsprechend der aufzubringenden Schicht in einer Pulverlage auf einem Substrat oder einem bereits hergestellten Teil eines Bauteils aufgebracht wird, um anschließend durch Aufschmelzen oder Sintern des Pulvers eine Verbindung des Pulvermaterials zu dem Bauteil bzw. untereinander zu schaffen.

Um eine Pulverlage auf dem Bauteil zu erzeugen kann ein Pulverbett verwendet werden, in welchem der bereits erzeugte Teil des Bauteils angeordnet ist und in der Richtung des Aufbaus des Bauteils von einer Pulverlage überdeckt wird, die selektiv entsprechend der Kontur des zu erzeugenden Bauteils auf dem Bauteil abgeschieden werden soll. Durch selektives Schmelzen oder Sintern entsprechend dem Schnittmuster des zu erzeugenden Bauteils in der jeweiligen Lage können dreidimensionale Gegenstände erzeugt werden.

Aus der europäischen Patentanmeldung EP 2 327 535 A1 und aus der US-Patentanmeldung US 2010/174392 A1 sind jeweils Verfahren zur generativen Herstellung von einem Bauteil bekannt, wobei parallel zur lagenweisen Herstellung des Bauteils mindestens ein Dokumentationskörper unter den gleichen Bedingungen hergestellt wird wie das Bauteil, wobei die Dokumentationskörper jeweils in Form von Vollkörpern erzeugt werden.

Diese Verfahren sind auch für die Herstellung von Komponenten von Flugzeugtriebwerken oder anderen sicherheitsrelevanten Bauteilen geeignet. Allerdings ist für derartige sicherheitsrelevante Bauteile eine vollständige Dokumentation der Herstellung von den Ausgangsmaterialien bis zum Endprodukt notwendig. Bei der generativen Herstellung aus Pulvermaterial ist somit auch eine genaue Dokumentation des Pulvermaterials und dessen Verarbeitung erforderlich. Dies kann beispielsweise dadurch erfolgen, dass das eingesetzte Pulvermaterial analysiert und die Analyseergebnisse gespeichert werden. Allerdings kann es gerade bei der generativen Herstellung mit Pulvermaterial dazu kommen, dass Pulvermaterial unterschiedlicher Chargen vermischt wird, sodass beispielsweise auf Analyseergebnisse von den Herstellern oder Lieferanten nicht mehr zurückgegriffen werden kann, da nunmehr eine Pulvermischung aus mehreren Chargen vorliegt. Entsprechend müsste bei jeder potentiellen Vermischung von Pulvermaterial, das zur Herstellung im generativen Fertigungsverfahren eingesetzt wird, eine entsprechende Analyse des Pulvermaterials durchgeführt werden. Dies führt jedoch zu einem erheblichen Aufwand.

### OFFENBARUNG DER ERFINDUNG

### AUFGABE DER ERFINDUNG

Es ist deshalb Aufgabe der vorliegenden Erfindung eine Möglichkeit zu schaffen, auf eine aufwändige Analyse der eingesetzten Pulvermaterialien zu verzichten, aber gleichzeitig die Rückverfolgung der bei der Herstellung eingesetzten Materialien zu gewährleisten. Dabei soll ein geeignetes Verfahren einfach durchführbar und zuverlässig sein.

### TECHNISCHE LÖSUNG

Diese Aufgabe wird gelöst mit einem Verfahren mit den Merkmalen des Anspruchs 1 und einem Dokumentationskörper mit den Merkmalen des Anspruchs 8. Vorteilhafte Ausgestaltungen sind Gegenstand der abhängigen Ansprüche.

Gemäß der Erfindung wird vorgeschlagen während der generativen Herstellung von einem oder mehreren Bauteilen durch schichtweises Abscheiden von Pulvermaterial gleichzeitig einen entsprechenden Dokumentationskörper zu erzeugen, der unter den gleichen Bedingungen hergestellt wird wie das oder die entsprechenden Bauteile. Da bei den generativen Herstellungsverfahren zusätzliche Bauteile ohne großen Aufwand erzeugt werden können, kann ein entsprechender Dokumentationskörper parallel zu der eigentlichen Herstellung der Bauteile in effizienter Weise erzeugt werden.

Die Herstellung des Dokumentationskörpers ist in Form eines Gefäßes, da in dem Gefäß das während der Herstellung verwendete Pulver entsprechend der lagenweise Aufbringung schichtweise aufgenommen werden kann, sodass nicht nur das Material des fertig gestellten Bauteils zur Dokumentation in dem Dokumentationskörper vorliegt, sondern auch das entsprechende Ausgangsmaterial des Pulvers und zwar genau in der schichtweisen Abfolge wie es bei der Herstellung eingesetzt worden ist.

Das Gefäß ist abgeschlossen ausgebildet, wobei eine geschlossene, einstückige Hülle gebildet wird, die den Hohlraum vollständig umschließt, in dem das Pulver lagenweise entsprechend der Verwendung bei der Herstellung eingelagert ist. Dadurch ist auch gewährleistet, dass das Pulver ohne Einflüsse der Umgebung und dadurch erzeugte Veränderungen über einen langen Zeitraum aufbewahrt werden kann. Die Erzeugung einer geschlossenen Hülle mit einem Boden, einer Seitenbegrenzung, wie beispielsweise einer Mantelwand eines Zylinders oder entsprechenden Seitenwänden eines Quaders, und einem Deckel kann durch die generativen Fertigungsverfahren in sehr einfacher Weise realisiert werden. Gleichzeitig ist automatisch das zu dokumentierende Pulver in dem von der Hülle eingeschlossenem Hohlraum enthalten. Die Dimensionen des Dokumentationskörpers oder entsprechender Teile davon, wie beispielsweise Boden, Wand oder Decke können so gewählt werden, dass daraus entsprechende Testproben erzeugt werden können, falls bei einem späteren Bauteilschaden eine Untersuchung des Ausgangsmaterials und des Verarbeitungsprozesses erforderlich wird. Beispielsweise können derartige Testproben Probenkörper für mechanische Versuche sein, wie beispielsweise Flachzugproben oder Rundzugproben.

Darüber hinaus kann an dem Dokumentationskörper unmittelbar bei der Herstellung oder nachfolgend eine Kennzeichnung zur Identifizierung eingearbeitet oder angebracht werden.

### KURZBESCHREIBUNG DER FIGUREN

Die beigefügten Zeichnungen zeigen in rein schematischer Weise in
Fig. 1 eine schematischen Darstellung einer Vorrichtung zur generativen Herstellung von Bauteilen am Beispiel des selektiven Laserschmelzens;
Fig. 2 eine Schnittdarstellung durch einen Dokumentationskörper und herzustellende Bauteile während der Herstellung ;
Fig. 3 eine Schnittdarstellung durch einen Dokumentationskörper und herzustellende Bauteile nach Fertigstellung der Bauteile;
Fig. 4 eine Darstellung einer Flachzugprobe; und in
Fig. 5 eine Darstellung einer Rundzugprobe.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen deutlich, wobei die Erfindung nicht auf diese Ausführungsbeispiele beschränkt ist.

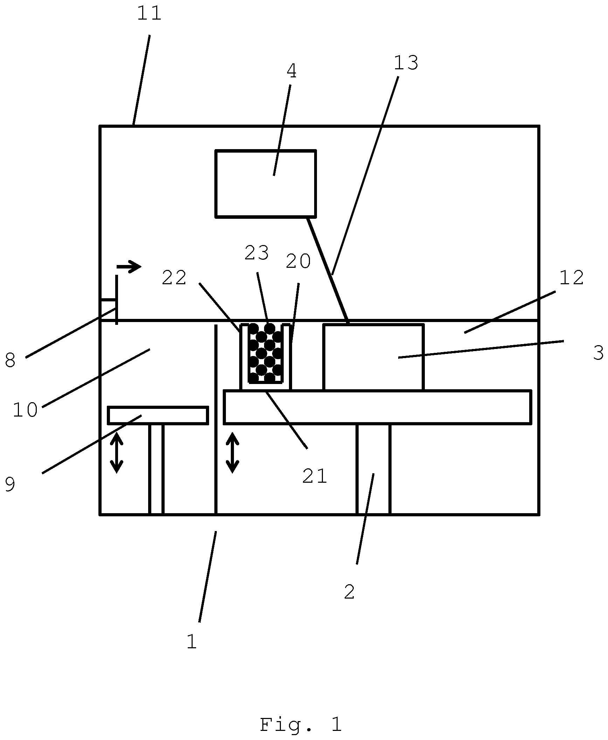

Die Figur 1 zeigt in einer rein schematischen Darstellung eine Vorrichtung 1, wie sie beispielsweise für das selektive Laserschmelzen zur generativen Herstellung eines Bauteils Verwendung finden kann. Die Vorrichtung 1 umfasst einen Hubtisch 2, auf dessen Plattform ein Halbzeug 3 (Teil eines Bauteils) angeordnet ist, auf dem schichtweise Material abgeschieden wird, um ein dreidimensionales Bauteil zu erzeugen. Hierzu wird mittels des Schiebers 8 Pulver 10, das sich oberhalb eines Hubtisches 9 in einem Pulvervorrat befindet, schichtweise über das Halbzeug 3 geschoben und anschließend durch den Laserstrahl 13 eines Lasers 4 durch Aufschmelzen mit dem bereits vorhandenen Halbzeug 3 verbunden. Die Verbindung des Pulvermaterials in einer Pulverschicht mit dem Halbzeug 3 erfolgt durch den Laser 4 abhängig von der gewünschten Kontur des zu fertigenden Bauteils, sodass beliebige, dreidimensionale Formen erzeugt werden können. Entsprechend wird der Laserstrahl 13 über das Pulverbett 12 geführt, um durch unterschiedliche Auftreffpunkte auf dem Pulverbett entsprechend der Kontur des dreidimensionalen Bauteils in der der erzeugten Schichtebene entsprechenden Schnittebene des Bauteils Pulvermaterial aufzuschmelzen und dieses mit dem bereits erzeugten Teil eines Bauteils oder auf einem anfänglich bereit gestellten Substrat zu verbinden. Hierbei kann der Laserstrahl 13 durch eine geeignete Ablenkeinheit über die Oberfläche des Pulverbetts 12 geführt werden und/oder das Pulverbett könnte gegenüber dem Laserstrahl 13 bewegt werden.

Um unerwünschte Reaktionen mit der Umgebungsatmosphäre beim Aufschmelzen oder Sintern zu vermeiden, kann der Prozess in einem abgeschlossenen Raum, der durch ein Gehäuse 11 der Vorrichtung 1 bereit gestellt wird, stattfinden und es kann zudem eine inerte Gasatmosphäre bereit gestellt, um beispielsweise Oxidation des Pulvermaterials und dergleichen beim Abscheiden zu vermeiden. Als inertes Gas kann beispielsweise Stickstoff verwendet werden, welches über eine nicht dargestellte Gasversorgung bereit gestellt wird.

Anstelle des Inertgases könnte auch ein anderes Prozessgas verwendet werden, wenn beispielsweise eine reaktive Abscheidung des Pulvermaterials gewünscht ist.

Darüber hinaus sind auch andere Strahlungsarten denkbar, wie beispielsweise Elektronenstrahlen oder andere Teilchenstrahlen oder Lichtstrahlen, die bei der Stereolithographie eingesetzt werden.

In der Figur 1 ist zudem ein Dokumentskörper 20 gezeigt, der parallel zu dem einen zu erzeugenden Bauteil bzw. einer Mehrzahl von zu erzeugenden Bauteilen 3 hergestellt wird. In gezeigtem Ausführungsbeispiel ist der Dokumentationskörper 20 durch ein Gefäß mit einem Boden 21 und einer den Boden umgebenden Seitenwand 22, beispielsweise in Form eines Zylinders, gebildet, in dem ähnlich, wie in dem Pulverbett 12 das Pulvermaterial 23 der vorangegangenen Herstellungsschritte aufgenommen ist. Zur Verdeutlichung ist das Pulver 23 im Dokumentationskörper 20 schematisch dargestellt, während hierauf bei der Darstellung des Pulverbetts 12 verzichtet worden ist.

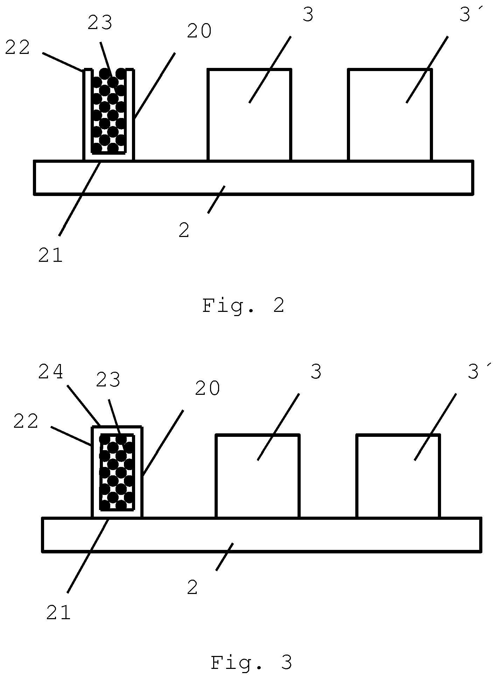

Die Figur 2 zeigt die Situation bei der Herstellung im Detail für zwei herzustellende Bauteile 3, 3' und den Dokumentationskörper 20, der als Gefäß mit einem Hohlraum ausgebildet ist, in dem das bisher bei der Herstellung verwendete Pulvermaterial aufgenommen ist. Wie sich aus der Figur 2 ergibt, ist zu Beginn der Herstellung der Bauteile 3, 3' die Bodenplatte 21 des Dokumentationskörpers 20 gebildet worden, und nachdem die Bodenplatte eine ausreichende Dicke erreicht hat, ist bei den nachfolgenden Produktionsschritten, bei denen das Pulver lagenweise entsprechend der zu erzeugenden Konturen der Bauteile 3, 3' und des Dokumentationskörpers 20 aufgeschmolzen und verbunden worden ist, lediglich eine Seitenbegrenzung beispielsweise in Form einer umlaufenden Seitenwand 22 beim Dokumentationskörper 20 erzeugt worden, sodass die einzelnen Pulverlagen bei der Herstellung im Innenraum des Dokumentationskörpers 20 aufgenommen sind.

Die Figur 3 zeigt die Situation nach Fertigstellung der Bauteile 3, 3' und des Dokumentationskörpers 20, wobei nach dem Ende der Herstellung der Bauteile 3, 3' ein Deckel 24 auf der umlaufenden Seitenwand 22 des Dokumentationskörpers 20 angeordnet worden ist, sodass sich eine geschlossene Hülle ergibt und das Pulver 22 in einem abgeschlossenen Hohlraum des Dokumentationskörpers 20 eingekapselt ist. Der Deckel 24 kann somit mit Pulver hergestellt werden, welches in den Bauteilen 3, 3' nicht verbaut ist. Allerdings ist es auch denkbar, gleichzeitig mit der Fertigstellung der Bauteile 3, 3' die Herstellung des Deckels 24 abzuschließen, sodass der Deckel 24 aus den Pulverlagen gebildet ist, die auch den Abschluss der Bauteile 3, 3' bilden.

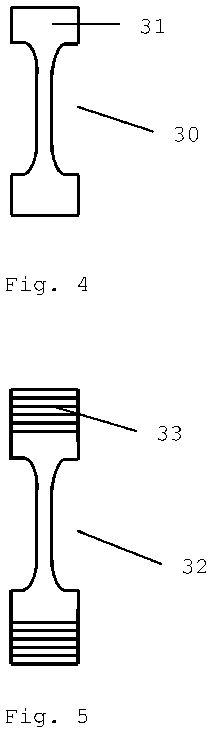

Die Dimension der umlaufenden Seitenwand 22 des Dokumentationskörpers 20 kann so gewählt werden, dass aus der Seitenwand entsprechende Probenkörper gewonnen werden können, wie beispielsweise Flachzugproben 30 mit einem flachen Probenkopf 31 oder Rundzugproben 32 mit einem zylindrischen Probenkopf mit Gewinde 33, wie sie in den Figuren 4 und 5 dargestellt sind. Entsprechende Probenkörper können auch aus dem Boden oder dem Deckel 24 gewonnen werden. Darüber hinaus sind andere Arten von Probenkörpern, beispielsweise für mikroskopische Untersuchungen, für Schliffbilder, für chemische Analysen und dergleichen sowie andere Formen von Probenkörpern möglich.

Darüber hinaus ist es auch vorstellbar direkt den Dokumentationskörper entsprechend der Form gewünschter Probenkörper herzustellen.

Mit dem im Ausführungsbeispiel vorgestelltem Dokumentationskörper ist es möglich sowohl das Pulvermaterial, das zur Herstellung der Bauteile 3, 3' verwendet worden ist, als auch die Prozessierung des Pulvermaterials zu dokumentieren, da sowohl das unverarbeitete Pulvermaterial in dem Dokumentationskörper 20 vorliegt, als auch das verarbeitete Pulvermaterial in Form des entsprechenden Gefäßes zur Verfügung steht, um nachträglich untersucht und charakterisiert zu werden. Damit ist bei einem späteren Schadensfall der Bauteile 3, 3' eine eindeutige Charakterisierung des Pulvermaterials und der Verarbeitungsprozesse bei der generativen Herstellung möglich.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Änderungen in der Weise möglich sind, dass einzelne Merkmale weggelassen oder andersartige Kombinationen von Merkmalen verwirklicht werden können, solange der Schutzbereich der beigefügten Ansprüche nicht verlassen wird.

## Patentansprüche

1. Verfahren zur generativen Herstellung von mindestens einem Bauteil (3) durch schichtweises Aufbringen von Pulvermaterial auf einem Substrat oder einem vorher hergestellten Teil des Bauteils (3) und lagenweises Verbinden des Pulvermaterials zu dem Bauteil (3) entsprechend der dreidimensionalen Struktur des Bauteils, wobei parallel zur lagenweisen Herstellung des Bauteils (3) mindestens ein Dokumentationskörper (20) unter den gleichen Bedingungen hergestellt wird, wie das Bauteil (3),
**dadurch gekennzeichnet, dass**
- der Dokumentationskörper (20) in Form eines Gefäßes erzeugt wird, wobei in dem Gefäß die während der Herstellung verwendeten Pulverlagen aufgenommen sind und
- das Gefäß abgeschlossen ist und eine in sich geschlossene, einstückige Hülle bildet, die einen Hohlraum vollständig umschließt, in dem das zu dokumentierende Pulver (23) lagenweise entsprechend der Verwendung bei der Herstellung so eingelagert ist, dass das Pulver ohne Einflüsse der Umgebung und dadurch erzeugte Veränderungen über einen langen Zeitraum aufbewahrbar ist.

2. Verfahren nach Anspruch 1,
**dadurch gekennzeichnet, dass**
zu Beginn der Herstellung ein Boden (21) des Dokumentationskörpers (20) gebildet wird und anschließend auf dem Boden eine den Boden umgebende Seitenbegrenzung (22), wobei über dem Boden innerhalb der Seitenbegrenzung das zur Herstellung verwendete Pulvermaterial (23) lagenweise eingelagert wird.

3. Verfahren nach Anspruch 2,
**dadurch gekennzeichnet, dass**
mit der Fertigstellung des Bauteils (3) oder nach der Fertigstellung des Bauteils (3) ein Deckel (24) auf der Seitenbegrenzung (22) zur Kapselung des auf dem Boden innerhalb der Seitenbegrenzung angeordneten Pulvers erzeugt wird.

4. Verfahren nach einem der vorhergehenden Ansprüche,
**dadurch gekennzeichnet, dass**
die Dimensionen des Dokumentationskörpers (20) oder von Teilen davon so gewählt werden, dass daraus Testproben erzeugt werden können.

5. Verfahren nach einem der vorhergehenden Ansprüche,
**dadurch gekennzeichnet, dass**
der Dokumentationskörper zumindest teilweise in Form einer Testprobe hergestellt wird.

6. Verfahren nach Anspruch 5,
**dadurch gekennzeichnet, dass**
der Dokumentationskörper zumindest teilweise in Form einer Flachzugprobe (30) oder Rundzugprobe (32) hergestellt wird.

7. Verfahren nach einem der vorhergehenden Ansprüche,
**dadurch gekennzeichnet, dass**
der Dokumentationskörper während der Herstellung mit einer Kennzeichnung zur Identifizierung versehen wird.

8. Dokumentationskörper zur Dokumentation der generativen Herstellung von Bauteilen durch schichtweises Aufbringen von Pulvermaterial auf einem Substrat oder einem vorher hergestellten Teil des Bauteils und lagenweises Verbinden des Pulvermaterials zu dem Bauteil hergestellt mit einem Verfahren gemäß einem der Ansprüche 1 bis 7.

## Claims

1. Method for the additive manufacturing of at least one component (3) by applying powder material in layers to a substrate or to a previously manufactured part of the component (3) and by bonding the powder material layer-by-layer to the component (3) according to the three-dimensional structure of the component, at least one documentation body (20) being manufactured under the same conditions as the component (3) in parallel with the layer-by-layer manufacturing of the component (3), **characterized in that**
- the documentation body (20) is produced in the form of a vessel, the powder layers used during the manufacturing being received in the vessel and
- the vessel is closed off and forms a self-contained, integral shroud that completely encloses a hollow space in which the powder (23) to be documented is deposited layer-by-layer according to the use during the manufacturing, such that the powder can be stored for a long period of time without being influenced by the environment and changes caused thereby.

2. Method according to claim 1, **characterized in that,** at the start of the manufacturing, a base (21) of the documentation body (20) is formed and, adjoining the base, a lateral boundary (22) that surrounds the base, the powder material (23) used for the manufacturing being deposited layer-by-layer over the base within the lateral boundary.

3. Method according to claim 2, **characterized in that,** upon finishing the component (3) or after finishing the component (3), a cover (24) is produced on the lateral boundary (22) for encasing the powder arranged on the base within the lateral boundary.

4. Method according to any of the preceding claims, **characterized in that** the dimensions of the documentation body (20) or of parts thereof are selected such that test specimens can be produced therefrom.

5. Method according to any of the preceding claims, **characterized in that** the documentation body is manufactured at least partially in the form of a test specimen.

6. Method according to claim 5, **characterized in that** the documentation body is manufactured at least partially in the form of a flat tensile specimen (30) or a round tensile specimen (32).

7. Method according to any of the preceding claims, **characterized in that,** during the manufacturing, the documentation body is provided with a label for identification.

8. Documentation body for documenting the additive manufacturing of components by applying powder material in layers to a substrate or to a previously manufactured part of the component and by bonding the powder material layer-by-layer to the component, manufactured by means of a method according to any of claims 1 to 7.

## Revendications

1. Procédé de fabrication générative d'au moins une pièce (3) par l'application par couches d'un matériau en poudre sur un substrat ou une partie de la pièce (3) préalablement fabriquée et la liaison par couches du matériau en poudre avec la pièce (3) conformément à la structure tridimensionnelle de la pièce, au moins un corps de documentation (20) étant fabriqué dans les mêmes conditions que la pièce (3), parallèlement à la fabrication par couches de la pièce (3), **caractérisé en ce que**
- le corps de documentation (20) est produit sous la forme d'un récipient, les couches de poudre utilisées pendant la fabrication étant ajoutées dans le récipient et
- le récipient est fermé et forme une coque monobloc fermée sur elle-même renfermant complètement une cavité dans laquelle la poudre à documenter (23) est stockée en couches lors de la fabrication, selon l'utilisation, de sorte que la poudre peut être conservée sur une longue période sans influence de l'environnement ni modification occasionnée de ce fait.

2. Procédé selon la revendication 1, **caractérisé en ce qu'**au début de la fabrication, un fond (21) du corps de documentation (20) est formé et ensuite, sur le fond, une délimitation latérale (22) entourant le fond, le matériau en poudre (23) utilisé pour la fabrication étant déposé en couches sur le fond, au sein de la délimitation latérale.

3. Procédé selon la revendication 2, **caractérisé en ce que,** lors de l'achèvement de la pièce (3) ou après l'achèvement de la pièce (3), un couvercle (24) est produit sur la délimitation latérale (22) pour encapsuler la poudre disposée sur le fond au sein de la délimitation latérale.

4. Procédé selon l'une des revendications précédentes, **caractérisé en ce que** les dimensions du corps de documentation (20) ou de parties de celui-ci sont choisies de manière à pouvoir produire des échantillons de test à partir de celui-ci.

5. Procédé selon l'une des revendications précédentes, **caractérisé en ce que** le corps de documentation est fabriqué au moins partiellement sous la forme d'un échantillon de test.

6. Procédé selon la revendication 5, **caractérisé en ce que** le corps de documentation est fabriqué au moins partiellement sous la forme d'une éprouvette de traction prismatique (30) ou d'une éprouvette de traction cylindrique (32).

7. Procédé selon l'une des revendications précédentes, **caractérisé en ce que** le corps de documentation est muni, lors de la fabrication, d'une étiquette permettant son identification.

8. Corps de documentation pour la documentation de la fabrication générative de pièces par l'application par couches d'un matériau en poudre sur un substrat ou une partie de la pièce préalablement fabriquée et la liaison par couches du matériau en poudre avec la pièce fabriquée au moyen d'un procédé selon l'une des revendications 1 à 7.
